Europäisches Patentamt

European Patent Office

Office européen des brevets

(11) Veröffentlichungsnummer : **0 485 043 B1**

(12) **EUROPÄISCHE PATENTSCHRIFT**

(45) Veröffentlichungstag der Patentschrift :
07.12.94 Patentblatt 94/49

(21) Anmeldenummer : **91250284.6**

(22) Anmeldetag : **15.10.91**

(51) Int. Cl.⁵ : **G01N 21/89**

(54) **Verfahren und Vorrichtung zur Bestimmung der optischen Qualität einer transparenten Platte.**

(30) Priorität : **06.11.90 DE 4035168**

(43) Veröffentlichungstag der Anmeldung :
**13.05.92 Patentblatt 92/20**

(45) Bekanntmachung des Hinweises auf die
Patenterteilung :
**07.12.94 Patentblatt 94/49**

(84) Benannte Vertragsstaaten :
**AT BE CH DE DK ES FR GB GR IT LI LU NL SE**

(56) Entgegenhaltungen :
**DE-A- 2 361 209**
**US-A- 3 799 679**

(73) Patentinhaber : **FLACHGLAS**
**AKTIENGESELLSCHAFT**
**Otto-Seeling-Promenade 10-14**
**D-90762 Fürth (DE)**

(72) Erfinder : **Bretschneider, Joachim, Dr. Ing.**
**Gutenbergstrasse 26**
**W-8480 Weiden (DE)**

(74) Vertreter : **Goddar, Heinz J., Dr. et al**
**FORRESTER & BOEHMERT**
**Franz-Joseph-Strasse 38**
**D-80801 München (DE)**

EP 0 485 043 B1

## Beschreibung

Die Erfindung betrifft ein Verfahren zur Bestimmung der optischen Qualität einer transparenten Platte, insbesondere einer Floatglasscheibe, bei dem zwei parallele, einen gegenseitigen Abstand aufweisende Lichtstrahlen unter einem spitzen Winkel, bezogen auf die Plattennormale, auf die Platte gerichtet werden, die von der Platte reflektierten Lichtstrahlen separat mittels einer einen lichtempfindlichen Detektor aufweisenden Detektoreinrichtung aufgefangen werden, und die Richtung der reflektierten Lichtstrahlen ausgewertet wird, sowie eine Vorrichtung zur Bestimmung der optischen Qualität einer transparenten Platte, mit einer Laserlichtquelle und einer Strahlteilereinrichtung zur Erzeugung von zwei einen gegenseitigen Abstand aufweisenden parallelen Lichtstrahlen, die unter einem spitzen Winkel, bezogen auf die Plattennormale, auf die Platte gerichtet werden, einer einen lichtempfindlichen Detektor aufweisenden Detektoreinrichtung zur separaten Erfassung der reflektierten Lichtstrahlen und mit einer Auswerteeinrichtung zur Bestimmung der optischen Qualität der Platte aus den Signalen der Detektoreinrichtung.

Bei der Herstellung von transparenten Platten, insbesondere aber bei der Flachglasherstellung, ist es erforderlich, die optische Qualität des produzierten Materials regelmäßig, und zwar möglichst bald nach dessen Fertigung, zu überprüfen, damit im Bedarfsfall rechtzeitig Produktionsparameter verändert oder mangelhafte Platten ausgesondert werden können.

Die Erfindung wird im folgenden ebenso wie der Stand der Technik am Beispiel der Flachglasuntersuchung erläutert. Sie ist jedoch auch zur Überprüfung der optischen Qualität anderer transparenter, plattenförmiger Produkte, z.B. aus Kunststoff, einsetzbar.

Neben der Feststellung von Glasfehlern, wie z.B. Homogenitätsschwankungen, Gasblasen oder Einschlüssen, interessiert in der Praxis vor allem die Planität der Glasoberflächen. Störungen der Planität werden vor allem senkrecht zur Ziehrichtung eines Glasbandes in Form von sogenannten Ziehstreifen beobachtet. Die Folge derartiger Planitätsabweichungen sind optische Verzerrungen, die sich in der Ablenkung von Lichtstrahlen in Reflexion und Transmission äußern.

Als quantitative Meßgröße für die optische Qualität von Glasplatten dient beispielsweise deren Brechkraft, und zwar als Reflexionsbrechkraft der einzelnen Plattenoberflächen sowie als Brechkraft in Transmission der Platte. Die Brechkraft ist dabei definiert als die Ableitung des beobachteten Winkels, also des Reflexionswinkels oder des Durchlaßwinkels, nach dem Ort. Sie ist umso größer, je stärker die Glasoberfläche lokal gekrümmt ist.

Nach dem Stand der Technik erfolgt in der Praxis eine subjektive Prüfung der optischen Qualität von Glasplatten in Form einer Begutachtung durch besonders geschultes Personal. Dabei wird Licht durch die zu untersuchende Glasplatte auf eine Projektionswand gestrahlt. Planitätsabweichungen führen zu örtlichen Helligkeitsschwankungen (Linseneffekt) und können so qualitativ bewertet werden. Andererseits gibt es schon Verfahren und Vorrichtungen zur quantitativen Bewertung der optischen Qualität von Glasplatten.

Die DE-PS 23 61 209, von der die Erfindung ausgeht, beschreibt ein Verfahren zur Bestimmung der optischen Qualität von Glasplatten, bei dem ein Laserlichtstrahl mit Hilfe eines Strahlteilers in zwei parallele Lichtstrahlen aufgespalten wird. Die beiden Lichtstrahlen fallen unter einem vorgegebenen spitzen Winkel, bezogen auf die Plattennormale, auf die Glasplatte und werden entweder an deren vorderer Oberfläche und anschließend an einem Hohlspiegel oder an einem hinter der Glasplatte angeordneten Hohlspiegel in Richtung auf einen lichtempfindlichen Detektor, der innerhalb einer rotierenden, trommelförmigen Schlitzblende angebracht ist, reflektiert. Ausgewertet wird der zeitliche Abstand der beiden vom lichtempfindlichen Detektor registrierten Lichtimpulse, wobei dieser zeitliche Abstand mit den Reflexionswinkeln der beiden reflektierten Strahlen korreliert. Die Schlitzblende stellt als Bestandteil der Detektoreinrichtung sicher, daß die beiden reflektierten Strahlen separat, nämlich zeitlich nacheinander, vom nicht ortsauflösenden lichtempfindlichen Detektor der Detektoreinrichtung erfaßt werden.

Das bekannte Verfahren ist nicht frei von Nachteilen. So kann mit ihm während eines Meßvorgangs lediglich eine der interessierenden Größen, also entweder nur die optische Qualität einer der beiden Glasoberflächen oder nur die Verzerrung in Transmission geprüft werden.

Für die Bewertung der optischen Qualität beider Oberflächen einer Glassplatte sowie der Ablenkung in Transmission sind drei aufeinanderfolgende verschiedene Messungen nötig, zwischen denen die Glasplatte gewendet und gereinigt werden muß. Dies führt zu einem hohen Zeitbedarf für die komplette Vermessung einer Platte. Außerdem ist nach wie vor lediglich eine qualitative oder halbquantitative Beurteilung des Meßdiagramms möglich, die durch einen erfahrenen Benutzer vorgenommen werden muß. Eine Ermittlung standardisierter Meßgrößen wie beispielsweise der Brechkraft erlaubt die bekannte Vorrichtung nicht.

Die bekannte Vorrichtung weist darüber hinaus eine erhebliche Baugröße mit allen daraus resultierenden Nachteilen auf. Sie erfordert zudem die Anordnung von Teilen der Meßvorrichtung auf beiden Glasseiten. Da die Meßgenauigkeit in hohem Maße von der Konstanz der Rotationsgeschwindigkeit der Schlitzblende abhängt, ist die bekannte Vorrichtung relativ störanfällig.

Der Erfindung liegt daher die Aufgabe zugrunde, das bekannte Verfahren und die bekannte Vorrichtung dahingehend zu verbessern, daß innerhalb einer kurzen Meßzeit alle wesentlichen optischen Daten einer transparenten Platte quantitativ mit einem einzigen Meßvorgang ermittelt werden können. Die erfindungsgemäße Vorrichtung soll vergleichsweise kompakt herstellbar sein; insbesondere sollen alle benötigten Vorrichtungselemente auf lediglich einer Plattenseite angebracht werden können.

Zur Lösung dieser Aufgabe schlägt die Erfindung ein Verfahren vor, bei dem alle vier von den beiden Oberflächen der Platte reflektierten Lichtstrahlen A1, A2, B1, B2 von einem ortsauflösenden Detektor aufgefangen werden, der gegenseitige Abstand und der Einfallswinkel $\epsilon_0$ der einfallenden Lichtstrahlen A, B in Abhängigkeit von der Dicke der Platte so eingestellt werden, daß die reflektierten Lichtstrahlen A1, A2, B1, B2 räumlich getrennt von der Detektoreinrichtung erfaßt werden, und aus den Auftrefforten aller vier reflektierten Lichtstrahlen A1, A2, B1, B2 auf dem ortsauflösenden Detektor die Parameter zur quantitativen Bestimmung der optischen Qualität der Platte errechnet werden.

Die parallelen Lichtstrahlen werden nach Möglichkeit unter einem Einfallswinkel $\epsilon_0$ von etwa 49° (46° - 52°), bezogen auf die Plattennormale, auf die Platte gerichtet, da bei diesem Winkel ein Maximum des Strahlabstands der reflektierten Lichtstrahlen erreicht wird.

Bei einer bevorzugten Ausführungsform werden die reflektierten Lichtstrahlen A1, A2, B1, B2 zeitlich getrennt von dem ortsauflösenden Detektor aufgefangen. Sie werden dabei vorzugsweise auf den Detektor fokussiert, da so die Ableitung der quantitativen Meßgrößen aus den Auftrefforten besonders einfach ist. Alternativ wird vorgeschlagen, daß die reflektierten Lichtstrahlen A1, A2, B1, B2 ohne Fokussierung im wesentlichen gleichzeitig, aber räumlich getrennt, von dem ortsauflösenden Detektor aufgefangen werden.

Eine besonders aussagekräftige quantitative Bewertung der optischen Qualität der untersuchten Platte ist dadurch möglich, daß aus den Auftrefforten der reflektierten Lichtstrahlen A1, A2, B1, B2 auf dem ortsauflösenden Detektor deren Reflexionswinkel $\epsilon_1$, $\epsilon_2$, $\epsilon_3$, $\epsilon_4$ ermittelt werden, wobei aus den Reflexionswinkeln $\epsilon_1$, $\epsilon_2$, $\epsilon_3$, $\epsilon_4$ der reflektierten Lichtstrahlen A1, A2, B1, B2 und dem gegenseitigen Abstand $a_L$ der einfallenden Lichtstrahlen A, B die Reflexionsbrechkräfte beider Plattenoberflächen sowie der Ablenkungswinkel und die Brechkraft in Transmission gemäß den in Anspruch 7 angegebenen Formeln berechnet werden.

Die Vorrichtung nach der Erfindung weist insbesondere zur Durchführung des erfindungsgemäßen Verfahrens in Weiterbildung des gattungsgemäßen Standes der Technik die folgenden Merkmale auf: die Detektoreinrichtung umfaßt einen ortsauflösenden Detektor und die Auswerteeinrichtung ist zur Ermittlung der die optische Qualität der Platte charakterisierenden quantitativen Parameter aus den Auftrefforten der vier von den beiden Oberflächen der Platte reflektierten Lichtstrahlen A1, A2, B1, B2 auf dem ortsauflösenden Detektor eingerichtet.

Damit Platten verschiedener Dicke mit der erfindungsgemäßen Vorrichtung störungsfrei untersucht werden können, besteht die Strahlteilereinrichtung zur Erzeugung unterschiedlicher Abstände der einfallenden Lichtstrahlen A, B aus mindestens zwei Strahlteilern, die je nach der Dicke der untersuchten Platte in den Strahlengang des von der Laserlichtquelle ausgesandten Lichtstrahls verfahrbar sind. Alternativ oder zusätzlich ist vorgesehen, daß die Strahlteilereinrichtung einen Strahlteiler mit motorisch in Abhängigkeit von der Dicke der Platte verstellbarem Strahlabstand aufweist.

Eine besonders kompakte Vorrichtung erhält man, wenn im Strahlengang der beiden einfallenden Lichtstrahlen ein erster planer Umlenkspiegel vorgesehen ist, der die Lichtstrahlen unter einem Einfallswinkel $\epsilon_0$ von etwa 49° auf die Platte richtet sowie wenn im Strahlengang der vier reflektierten Lichtstrahlen vor der Zerhackeinrichtung ein zweiter Umlenkspiegel vorgesehen ist. Dabei werden die Vorrichtungselemente vorzugsweise so angeordnet, daß die Laserlichtquelle und die Umlenkspiegel so ausgerichtet sind, daß die auf den ersten Umlenkspiegel auftreffenden Lichtstrahlen und die vom zweiten Umlenkspiegel reflektierten Lichtstrahlen A1, A2, B1, B2 annähernd parallel, und zwar im wesentlichen parallel zur Plattennormalen der Platte, verlaufen.

Soll eine umfassende quantitative Bewertung der optischen Qualität der Platte erfolgen, so wird die Auswerteeinrichtung erfindungsgemäß zur Ermittlung der Reflexionsbrechkräfte von beiden Plattenoberflächen sowie des Ablenkwinkels und der Brechkraft in Transmission aus den Auftrefforten der vier reflektierten Lichtstrahlen A1, A2, B1, B2 auf dem ortsauflösenden Detektor und dem Strahlabstand $a_L$ der einfallenden Lichtstrahlen A, B eingerichtet.

Als Detektor kommt insbesondere ein in der Lichteinfallsebene eindimensional ortsauflösender, analoger Photodetektor zur Anwendung.

In einer besonders bevorzugten Ausführungsform umfaßt die Detektoreinrichtung eine im Strahlengang der reflektierten Lichtstrahlen A1, A2, B1, B2 angeordnete Zerhackeinrichtung, wobei die Zerhackeinrichtung und die Strahlteilereinrichtung so einrichtbar sind, daß die vier reflektierten Lichtstrahlen A1, A2, B1, B2 zeitlich getrennt auf dem ortsauflösenden Detektor auftreffen.

Dabei ist bei der erfindungsgemäßen Vorrichtung ausschließlich im Strahlengang der reflektierten Lichtstrahlen A1, A2, B1, B2, und zwar bevorzugt zwischen der Zerhackeinrichtung und dem ortsauflösenden Detektor, eine Fokussiereinrichtung angeordnet, in deren plattenabgewandter Brennebene sich der ortsauflösende Detektor befindet.

Aufgabe der Zerhackeinrichtung ist es, die vier reflektierten Lichtstrahlen nacheinander auf den ortsauflösenden Detektor auftreffen zu lassen. Eine besonders klein bauende Zerhackeinrichtung, bei der auch durch längs der Einfallsebene vorliegende Verzerrungen der Plattenoberflächen verursachte Ablenkungen der reflektierten Lichtstrahlen aus der Einfallsebene hinaus nicht zu Fehlern führen, wird durch eine Trommel mit mindestens einer parallel zur Trommelachse ausgerichteten Schlitzblende in der Trommelwand gebildet, wobei die Trommel so schräggestellt angeordnet ist, daß nur deren der Platte abgewandte Trommelwand den Strahlengang der reflektierten Lichtstrahlen A1, A2, B1, B2 unterbricht. Zur Erzielung einer hohen Meßfrequenz bei vertretbaren Umdrehungsgeschwindigkeiten der Trommel ist vorgesehen, daß mindestens vier gleichmäßig auf der Trommelwand verteilte Schlitzblenden vorhanden sind.

In einer anderen Ausführungsform ist die Strahlteilereinrichtung so einstellbar, daß die vier reflektierten Lichtstrahlen A1, A2, B1, B2 räumlich getrennt auf dem ortsauflösenden Detektor auftreffen, und ist der Detektor zum gleichzeitigen ortsauflösenden Auffangen der vier reflektierten Lichtstrahlen A1, A2, B1, B2 eingerichtet. Der Detektor besteht in diesem Falle aus einer Vielzahl einzelner, in der Lichteinfallsebene nebeneinander angeordneter, separat abfragbarer, lichtempfindlicher Elemente.

Das erfindungsgemäße Verfahren und die erfindungsgemäße Vorrichtung werden mit besonderem Vorteil für die Qualitätsprüfung von Flachglasscheiben, insbesondere von Floatglasscheiben, eingesetzt.

Die Erfindung nutzt die überraschende Erkenntnis, daß eine gleichzeitige Bewertung der Reflexionsoptik beider Plattenoberflächen sowie der Transmissionsoptik der Platte möglich ist, obwohl Lichtstrahlen lediglich auf eine Plattenoberfläche gerichtet werden und ausschließlich die reflektierten Lichtstrahlen beobachtet werden. Von besonderem Vorteil ist, daß keine Vorrichtungsteile auf der der Lichtquelle abgewandten Plattenseite benötigt werden und die Platte nicht gewendet zu werden braucht. Außerdem ist das Meßergebnis innerhalb großer Grenzen unabhängig vom Abstand der Platte von der Meßvorrichtung. Die Erfindung erreicht dabei die Lösung der Aufgabe mit verblüffend einfachen Mitteln.

Die erfindungsgemäße Vorrichtung kann an beliebiger Stelle in der Produktionslinie untergebracht werden, da sie äußerst wenig Raumbedarf hat. Zur Durchführung von Messungen werden die transparenten Platten gleichförmig an der Meßvorrichtung vorbeitransportiert. Alternativ wird der Meßkopf selbst gegenüber der Platte verfahrbar angebracht. Bevorzugte Ausführungsformen des Verfahrens und der Vorrichtung nach der Erfindung sind Gegenstand der diesbezüglichen Unteransprüche.

Im folgenden wird die Erfindung anhand einer Zeichnung näher erläutert. Dargestellt sind in:

Fig. 1    der schematische Aufbau der Vorrichtung,

Fig. 2    eine schematische Darstellung der einfallenden Laserstrahlen A und B und der reflektierten Laserstrahlen A1, A2, B1, und B2 für eine Glasscheibe mit ideal ebenen und planparallelen Oberflächen

Fig. 3    eine schematische Darstellung der einfallenden Laserstrahlen A und B und der reflektierten Laserstrahlen A1, A2, B1 und B2 für eine Glasscheibe mit welligen Oberflächen.

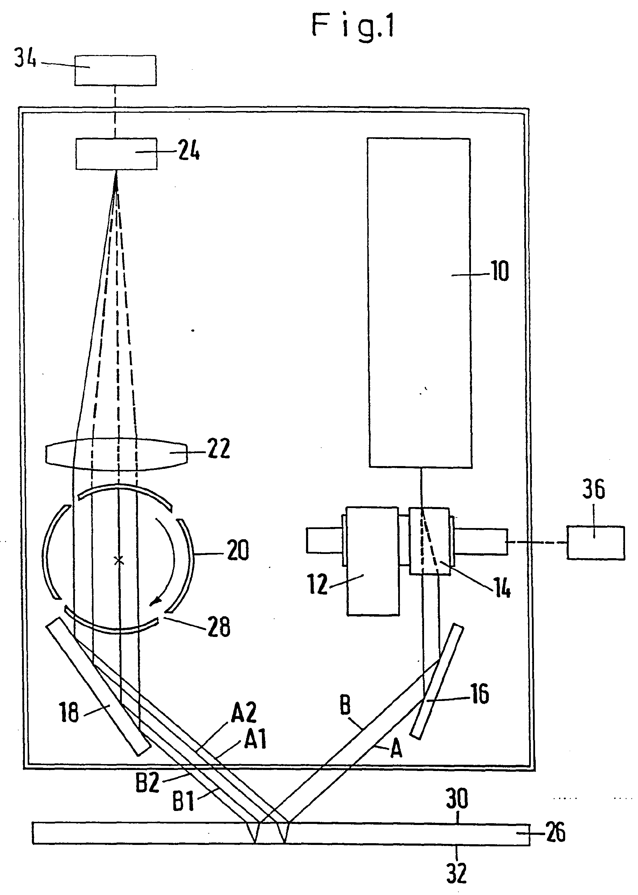

In Fig. 1 wird zunächst in nicht maßstäblicher Darstellung der prinzipielle Aufbau einer Vorrichtung nach der Erfindung gezeigt.

Aus einem Laser 10, beispielsweise einem Helium-Neon-Laser, tritt etwa parallel zur Plattennormalen ein Lichtstrahl aus, der in einem Strahlteiler 14 in zwei zueinander parallele Lichtstrahlen, die einen festen Abstand voneinander haben, aufgespalten wird.

An dieser Stelle kann alternativ Strahlteiler 12 oder Strahlteiler 14, die je nach zu messender Scheibendicke einen Strahlabstand von beispielsweise etwa 2,0 mm und 4,5 mm erzeugen, verwendet werden.

Die beiden Lichtstrahlen gelangen auf einen Umlenkspiegel 16, der die Strahlen so reflektiert, daß sie unter einem Einfallswinkel von vorzugsweise etwa 49° auf die Platte 26 treffen, was ein Maximum für den Abstand der reflektierten Lichtstrahlen voneinander erreichen läßt.

Durch Reflexion beider einfallender Lichtstrahlen an den beiden Plattenoberflächen 30, 32 entstehen vier reflektierte Lichtstrahlen A1, A2, B1, B2, die auf den Umlenkspiegel 18 gelangen und von diesem auf die Detektoreinrichtung gelenkt werden. Diese besteht aus einer mit konstanter Geschwindigkeit rotierenden Zerhackeinrichtung 20, einer Fokussiereinrichtung (Linse) 22 sowie einem ortsauflösenden lichtempfindlichen Detektor 24.

Die Linse 22 dient dazu, die vier reflektierten Lichtstrahlen auf den Detektor 24 zu bündeln, so daß alle Lichtstrahlen, wenn auch zu verschiedenen Zeiten, auf den gleichen Punkt treffen, sofern ihre Reflexionswinkel gleich sind. Die Linse 22 befindet sich vorzugsweise zwischen Zerhackeinrichtung 20 und Detektor 24.

Die Zerhackeinrichtung 20 ist eine schräg in den Strahlengang gestellte Trommel mit Schlitzen 28 in der Trommelwand, über deren vorderen Rand die reflektierten Lichtstrahlen hinwegtreten können, während sie die hintere Trommelwand nur durch die Schlitze 28 passieren können.

Die Vorrichtung wird vervollständigt durch eine hier nur angedeutete Auswerteeinrichtung 34 sowie eine Steuereinrichtung 36 zur Veränderung des Strahlabstands in Abhängigkeit von der Dicke der zu untersuchenden Platte 26. Eine derartige Abstandsveränderung wird dann erforderlich, wenn bei einer bestimmten Plattendicke die reflektierten Lichtstrahlen nicht mehr alle ausreichend voneinander räumlich getrennt sind, sobald sie auf die Zerhackeinrichtung 20 auftreffen. In diesem Fall muß durch eine Erhöhung oder Erniedrigung des Strahlabstands für eine genügende Trennung der Lichtsignale Sorge getragen werden. Die Dicke der untersuchten Platte 26 wird entweder mit Hilfe einer hier nicht gezeigten Dickenmeßeinrichtung ermittelt, einer Produktionsdatenbank entnommen oder vom Bediener eingegeben.

Die Auswerteeinrichtung 34 besteht üblicherweise aus einer Signalverarbeitungsstufe zur Ermittlung der Auftrefforte der vier reflektierten Lichtstrahlen auf dem ortsauflösenden Detektor 24 sowie einer Datenverarbeitungsstufe, die aus den Auftrefforten die gesuchten optischen Größen errechnet.

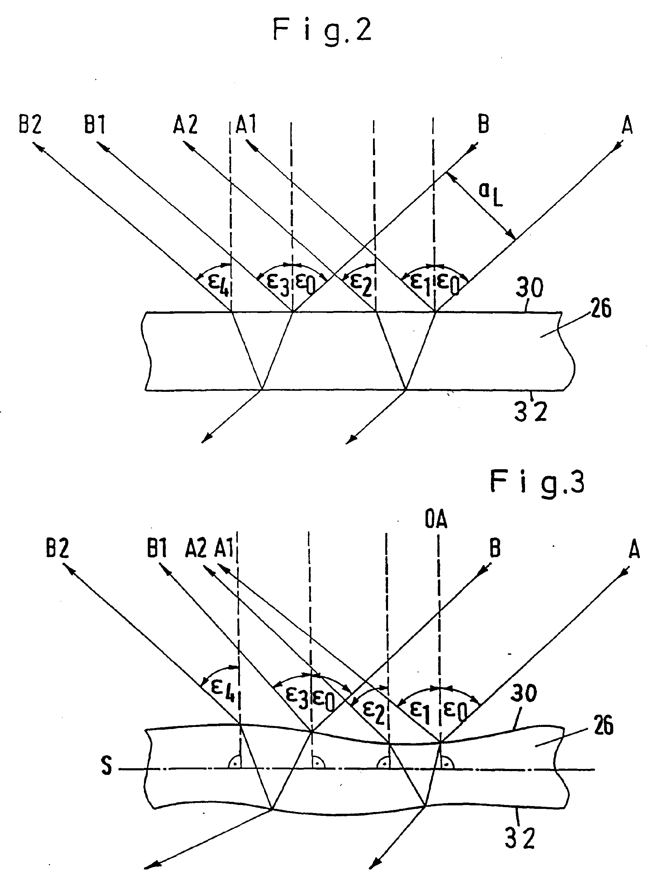

Die Ermittlung der die optische Qualität der untersuchten Platte 26 bestimmenden Größen im Rahmen des erfindungsgemäßen Verfahrens wird im folgenden an den Fig. 2 und 3 erläutert. Dabei zeigt Fig. 2 eine idealisierte Glasscheibe mit planparallelen und ungestörten Oberflächen, während in Fig. 3 die Verhältnisse bei einer Glasscheibe mit welliger Oberfläche - stark übertrieben - dargestellt sind.

Zu erkennen sind jeweils die unter einem Winkel $\epsilon_0$ von etwa 49°, bezogen auf die Scheibennormale OA (Fig. 3), auf die Glasscheibe einfallenden parallelen Lichtstrahlen A, B. Diese weisen einen Abstand $a_L$ auf. Durch Reflexion an der vorderen Scheibenoberfläche 30 entstehen reflektierte Lichtstrahlen A1, B1, die jeweils einen Winkel $\epsilon_1$ und $\epsilon_3$ zur Scheibennormale OA aufweisen. Entsprechend entstehen durch Reflexion an der hinteren Scheibenoberfläche 32 reflektierte Lichtstrahlen A2, B2, die die Glasscheibe mit einem Winkel von $\epsilon_2$ bzw. $\epsilon_4$ verlassen.

Ein Vergleich der Fig. 2 und 3 zeigt, daß im Falle einer Verzerrungen aufweisenden Glasscheibe (Fig. 3) die reflektierten Lichtstrahlen A1, A2, B1, B2 nicht wie im Falle der idealen Glasscheibe (Fig. 2) parallel verlaufen. Aus den gegenüber dem Einfallswinkel $\epsilon_0$ geänderten Reflexionswinkeln $\epsilon_1$, $\epsilon_2$, $\epsilon_3$ und $\epsilon_4$ können unter Anwendung des erfindungsgemäßen Verfahrens und der erfindungsgemäßen Vorrichtung und unter der Annahme geringer Abweichungen von der Planität die folgenden, die optische Qualität bestimmenden Größen errechnet werden:

$$\text{Ablenkungswinkel in Transmission} = \epsilon_2 - \epsilon_1$$

$$\text{Brechkraft in Transmission} = \text{const.} * \left( \left( \epsilon_4 - \epsilon_3 \right) - \left( \epsilon_2 - \epsilon_1 \right) \right) / a_L$$

$$\text{Reflexionsbrechkraft der vorderen Oberfläche (30)} = \text{const.} * (\epsilon_3 - \epsilon_1) / a_L$$

$$\text{Reflexionsbrechkraft der hinteren Oberfläche (32)} = \text{const.} * (\epsilon_4 - \epsilon_2 + \epsilon_3 - \epsilon_1) / a_L$$

Die so erhaltenen Meßgrößen können nun einer weiteren Auswertung unterworfen werden. So kann beispielsweise eine Umrechnung der auf einen Einfallswinkel von etwa 49° bezogenen Meßgrößen auf einen Einfallswinkel von 0° (senkrechte Inzidenz) vorgenommen werden. Darüber hinaus ist es möglich, mit Hilfe mathematischer Methoden oder durch elektronische Filterung die Brechkräfte und den Ablenkwinkel als Funktion des Ortes in einen langwelligen und einen kurzwelligen Anteil zu separieren.

Anhand von Fig. 2 sei noch erläutert, in welcher Weise der Abstand $a_L$ an unterschiedliche Plattendicken angepaßt werden muß. Wird nämlich die Dicke der Platte 26 gegenüber der Darstellung in Fig. 2 erhöht, so nähern sich die reflektierten Lichtstrahlen B1 und A2 einander zunehmend, bis sie schließlich bei einer bestimmten Plattendicke zusammenfallen. Da das erfindungsgemäße Verfahren nur einsetzbar ist, wenn tatsächlich vier reflektierte Lichtstrahlen A1, A2, B1, B2 in feststehender Reihenfolge auf dem ortsempfindlichen Detektor 24 eintreffen, muß in diesem Fall der Abstand $a_L$ soweit verändert werden, daß wieder ein ausreichender Abstand aller vier reflektierten Lichtstrahlen, insbesondere von B1 und A2, hergestellt wird. Dies kann durch einen Wechsel der Strahlteiler 12 und 14 oder auch durch eine - motorisch gesteuerte - Verstellung des Strahlabstands $a_L$ erfolgen.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Bezugszeichenliste

10      Laserlichtquelle
12      erster Strahlteiler
14      zweiter Strahlteiler
16      erster Umlenkspiegel
18      zweiter Umlenkspiegel
20      Zerhackeinrichtung
22      Linse
24      ortsauflösender Detektor
26      transparente Platte
28      Schlitzblenden in der Zerhackeinrichtung
30      vordere Plattenoberfläche
32      hintere Plattenoberfläche
34      Auswerteeinrichtung
36      Steuereinrichtung für Strahlteiler

## Patentansprüche

1.  Verfahren zur Bestimmung der optischen Qualität einer transparenten Platte (26), insbesondere einer Floatglasscheibe, bei dem zwei parallele, einen gegenseitigen Abstand ($a_L$) aufweisende Lichtstrahlen A, B unter einem spitzen Winkel ($\epsilon_0$), bezogen auf die Plattennormale (OA), auf die Platte gerichtet werden, die von der Platte reflektierten Lichtstrahlen separat mittels einer einen lichtempfindlichen Detektor (24) aufweisenden Detektoreinrichtung aufgefangen werden, und die Richtung der reflektierten Lichtstrahlen ausgewertet wird,
    dadurch gekennzeichnet,
    daß alle vier von den beiden Oberflächen (30, 32) der Platte (26) reflektierten Lichtstrahlen A1, A2, B1, B2 von einem ortsauflösenden Detektor (24) aufgefangen werden,
    daß der gegenseitige Abstand und der Einfallswinkel $\epsilon_0$ der einfallenden Lichtstrahlen A, B in Abhängigkeit von der Dicke der Platte so eingestellt werden, daß die reflektierten Lichtstrahlen A1, A2, B1, B2 räumlich getrennt von der Detektoreinrichtung erfaßt werden,
    und daß aus den Auftrefforten aller vier reflektierten Lichtstrahlen A1, A2, B1, B2 auf dem ortsauflösenden Detektor die Parameter zur quantitativen Bestimmung der optischen Qualität der Platte errechnet werden.

2.  Verfahren nach Anspruch 1, dadurch gekennzeichnet, daß die einfallenden Lichtstrahlen A, B unter einem Einfallswinkel $\epsilon_0$ von etwa 49° auf die Platte gerichtet werden.

3.  Verfahren nach einem der vorangehenden Ansprüche, dadurch gekennzeichnet, daß die reflektierten Lichtstrahlen A1, A2, B1, B2 zeitlich getrennt von dem ortsauflösenden Detektor aufgefangen werden.

4.  Verfahren nach Anspruch 3, dadurch gekennzeichnet, daß die reflektierten Lichtstrahlen A1, A2, B1, B2 auf den ortsauflösenden Detektor fokussiert werden.

5.  Verfahren nach einem der Ansprüche 1 oder 2, dadurch gekennzeichnet, daß die reflektierten Lichtstrahlen A1, A2, B1, B2 ohne Fokussierung im wesentlichen gleichzeitig, aber räumlich getrennt von dem ortsauflösenden Detektor aufgefangen werden.

6.  Verfahren nach einem der vorangehenden Ansprüche, dadurch gekennzeichnet, daß aus den Auftrefforten der reflektierten Lichtstrahlen A1, A2, B1, B2 auf dem ortsauflösenden Detektor deren Reflexions-

winkel $\epsilon_1$, $\epsilon_2$, $\epsilon_3$, $\epsilon_4$ ermittelt werden.

7. Verfahren nach Anspruch 6, dadurch gekennzeichnet, daß aus den Reflexionswinkeln $\epsilon_1$, $\epsilon_2$, $\epsilon_3$, $\epsilon_4$ der reflektierten Lichtstrahlen A1, A2, B1, B2 und dem gegenseitigen Abstand $a_L$ der einfallenden Lichtstrahlen A, B die Reflexionsbrechkräfte beider Plattenoberflächen sowie der Ablenkungswinkel und die Brechkraft in Transmission wie folgt berechnet werden:

$$\text{Ablenkungswinkel in Transmission} = \epsilon_2 - \epsilon_1$$

$$\text{Brechkraft in Transmission} = \text{const.} \cdot \left( \left( \epsilon_4 - \epsilon_3 \right) - \left( \epsilon_2 - \epsilon_1 \right) \right) / a_L$$

$$\text{Reflexionsbrechkraft der vorderen Oberfläche} = \text{const.} \cdot \left( \epsilon_3 - \epsilon_1 \right) / a_L$$

$$\text{Reflexionsbrechkraft der hinteren Oberfläche} = \text{const.} \cdot \left( \epsilon_4 - \epsilon_2 + \epsilon_3 - \epsilon_1 \right) / a_L$$

8. Vorrichtung zur Bestimmung der optischen Qualität einer transparenten Platte (26), insbesondere zur Durchführung des Verfahrens nach einem der vorangehenden Ansprüche, mit einer Laserlichtquelle (10) und einer Strahlteilereinrichtung (12, 14) zur Erzeugung von zwei einen gegenseitigen Abstand ($a_L$) aufweisenden parallelen Lichtstrahlen A, B , die unter einem spitzen Winkel, bezogen auf die Plattennormale (OA), auf die Platte (26) gerichtet werden, einer einen lichtempfindlichen Detektor (24) aufweisenden Detektoreinrichtung zur separaten Erfassung der reflektierten Lichtstrahlen A1, A2, B1, B2 und mit einer Auswerteeinrichtung (34) zur Bestimmung der optischen Qualität der Platte (26) aus den Signalen der Detektoreinrichtung,
dadurch gekennzeichnet,
daß die Detektoreinrichtung einen ortsauflösenden Detektor (24) aufweist und daß die Auswerteeinrichtung (34) zur Ermittlung der die optische Qualität der Platte (26) charakterisierenden quantitativen Parameter aus den Auftrefforten der vier von den beiden Oberflächen (30, 32) der Platte (26) reflektierten Lichtstrahlen A1, A2, B1, B2 auf dem ortsauflösenden Detektor (24) eingerichtet ist.

9. Vorrichtung nach Anspruch 8, dadurch gekennzeichnet, daß die Strahlteilereinrichtung zur Erzeugung unterschiedlicher Abstände der einfallenden Lichtstrahlen A, B aus mindestens zwei Strahlteilern (12, 14) besteht, die je nach der Dicke der untersuchten Platte (26) in den Strahlengang des von der Laserlichtquelle (10) ausgesandten Lichtstrahls verfahrbar sind.

10. Vorrichtung nach Anspruch 8, dadurch gekennzeichnet, daß die Strahlteilereinrichtung einen Strahlteiler mit motorisch in Abhängigkeit von der Dicke der Platte (26) verstellbarem Strahlabstand aufweist.

11. Vorrichtung nach einem der vorangehenden Ansprüche, dadurch gekennzeichnet, daß im Strahlengang der beiden einfallenden von der Strahlteilereinrichtung ausgehenden Lichtstrahlen ein erster planer Umlenkspiegel (16) vorgesehen ist, der die Lichtstrahlen A, B unter einem Einfallswinkel von etwa 49° auf die Platte (26) richtet.

12. Vorrichtung nach einem der vorangehenden Ansprüche, dadurch gekennzeichnet, daß im Strahlengang der vier reflektierten Lichtstrahlen A1, A2, B1, B2 ein zweiter Umlenkspiegel (18) vorgesehen ist.

13. Vorrichtung nach den Ansprüchen 11 und 12, dadurch gekennzeichnet, daß die Laserlichtquelle (10) und die Umlenkspiegel (16, 18) so ausgerichtet sind, daß die auf den ersten Umlenkspiegel (16) auftreffenden Lichtstrahlen und die vom zweiten Umlenkspiegel (18) reflektierten Lichtstrahlen A1, A2, B1, B2 annähernd parallel, und zwar im wesentlichen parallel zur Plattennormalen der Platte (26), verlaufen.

14. Vorrichtung nach einem der vorangehenden Ansprüche, dadurch gekennzeichnet, daß die Auswerteeinrichtung (34) zur Ermittlung der Reflexionsbrechkräfte von beiden Plattenoberflächen (30, 32) sowie des Ablenkwinkels und der Brechkraft in Transmission aus den Auftrefforten der vier reflektierten Lichtstrahlen A1, A2, B1, B2 auf dem ortsauflösenden Detektor (24) und dem Strahlabstand $a_L$ der einfallenden Lichtstrahlen A, B eingerichtet ist.

15. Vorrichtung nach einem der vorangehenden Ansprüche, dadurch gekennzeichnet, daß der Detektor (24) ein in der Lichteinfallsebene eindimensional ortsauflösender, analoger Photodetektor ist.

16. Vorrichtung nach Anspruch 15, dadurch gekennzeichnet, daß die Detektoreinrichtung eine im Strahlengang der reflektierten Lichtstrahlen A1, A2, B1, B2 angeordnete Zerhackeinrichtung (20) umfaßt, und daß die Zerhackeinrichtung (20) und die Strahlteilereinrichtung (12, 14, 16) so einrichtbar sind, daß die vier reflektierten Lichtstrahlen A1, A2, B1, B2 zeitlich getrennt auf dem ortsauflösenden Detektor (24) auftreffen.

17. Vorrichtung nach Anspruch 16, dadurch gekennzeichnet, daß im Strahlengang der reflektierenden Lichtstrahlen A1, A2, B1, B2 eine Fokussiereinrichtung (22) und der ortsauflösende Detektor (24) in der plattenabgewandten Brennebene der Fokussiereinrichtung (22) ortsfest angeordnet ist.

18. Vorrichtung nach Anspruch 17, dadurch gekennzeichnet, daß die Fokussiereinrichtung (22) zwischen der Zerhackeinrichtung (20) und dem ortsauflösenden Detektor (24) angeordnet ist.

19. Vorrichtung nach einem der Ansprüche 16 bis 18, dadurch gekennzeichne, daß im Strahlengang der einfallenden Lichtstrahlen (A, B) zwischen der Laserlichtquelle (10) und der Strahlteilereinrichtung (12, 14) eine Fokussiereinrichtung zum Fokussieren der einfallenden Lichtstrahlen (A, B) auf die Zerhackeinrichtung (20) angeordnet ist.

20. Vorrichtung nach einem der Ansprüche 16 bis 19, dadurch gekennzeichnet, daß die Zerhackeinrichtung (20) durch eine Trommel mit mindestens einer parallel zur Trommelachse ausgerichteten Schlitzblende (28) in der Trommelwand gebildet ist, wobei die Trommel so schräggestellt angeordnet ist, daß nur deren der Platte (26) abgewandte Trommelwand den Strahlengang der reflektierten Lichtstrahlen A1, A2, B1, B2 unterbricht.

21. Vorrichtung nach Anspruch 20, dadurch gekennzeichnet, daß mindestens vier gleichmäßig auf der Trommelwand verteilte Schlitzblenden (28) vorhanden sind.

22. Vorrichtung nach einem der Ansprüche 8 bis 14, dadurch gekennzeichnet, daß die Strahlteilereinrichtung (12, 14, 16) so einstellbar ist, daß die vier reflektierten Lichtstrahlen A1, A2, B1, B2 räumlich getrennt auf dem ortsauflösenden Detektor (24) auftreffen, und daß der Detektor (24) zum gleichzeitigen ortsauflösenden Auffangen der vier reflektierten Lichtstrahlen A1, A2, B1, B2 eingerichtet ist.

23. Vorrichtung nach Anspruch 22, dadurch gekennzeichnet, daß der ortsauflösende Detektor (24) aus einer Vielzahl einzelner, in der Lichteinfallsebene nebeneinander angeordneter, separat abfragbarer, lichtempfindlicher Elemente besteht.


## Claims

1. A method of determining the optical quality of a transparent sheet (26), more particularly a float glass pane, wherein two parallel light beams (A, B) spaced apart ($a_L$) are directed on to the sheet at an acute angle ($\varepsilon_o$) with respect to the sheet normal (OA), the light beams reflected by the sheet are received separately by means of a detector device comprising a photosensitive detector (24), and the direction of the reflected light beam is evaluated, characterised in that all four light beams A1, A2, B1, B2 reflected by the two surfaces (30, 32) of the sheet (26) are received by a location-resolving detector (24),
in that the mutual spacing and the angle of incidence ($\varepsilon_o$) of the incident light beams A, B are so adjusted in dependence on the sheet thickness that the reflected light beams A1, A2, B1, B2 are detected by the detector device in physically separate form,
and in that the parameters for quantitative determination of the optical quality of the sheet are calculated from the locations of the incidence of all four reflected light beams A1, A2, B1, B2 on the location-resolving detector.

2. A method according to claim 1, characterised in that the incident light beams A, B are directed on to the sheet at an angle of incidence ($\varepsilon_o$) of about 49°.

3. A method according to any one of the preceding claims, characterised in that the reflected light beams A1, A2, B1, B2 are received by the location-resolving detector in chronologically separate form.

4. A method according to claim 3, characterised in that the reflected light beams A1, A2, B1, B2, are focused on the location-resolving detector.

5. A method according to claim 1 or 2, characterised in that the reflected light beams A1, A2, B1, B2 are received by the location-resolving detector without focusing substantially simultaneously but in physically separate form.

6. A method according to any one of the preceding claims, characterised in that the angles of reflection $\varepsilon_1$, $\varepsilon_2$, $\varepsilon_3$, $\varepsilon_4$ of the reflected light beams A1, A2, B1, B2 are determined from the locations of the incidence of the reflected light beams A1, A2, B1, B2 on the location-resolving detector.

7. A method according to claim 6, characterised in that the reflection refractive powers of the two sheet surfaces and the angle of deviation and the refractive power in transmission are calculated as follows from the reflection angles $\varepsilon_1$, $\varepsilon_2$, $\varepsilon_3$, $\varepsilon_4$ of the reflected light beams A1, A2, B1, B2 and the mutual spacing $a_L$ of the incident light beams A, B:
angle of deviation in transmission
$$= \varepsilon_2 - \varepsilon_1$$
refractive power in transmission
$$= \text{const.} \cdot ((\varepsilon_4 - \varepsilon_3) - ((\varepsilon_2 - \varepsilon_1)) / a_L$$
reflection refractive power of the front surface
$$= \text{const.} \cdot (\varepsilon_3 - \varepsilon_1)/a_L$$
reflection refractive power of the back surface
$$= \text{const.} \cdot (\varepsilon_4 - \varepsilon_2 + \varepsilon_3 - \varepsilon_1) / a_L.$$

8. Apparatus for determining the optical quality of a transparent sheet (26), more particularly for performing the method according to any one of the preceding claims, comprising a laser light source (10) and a beam splitter device (12, 14) for producing two parallel light beams (A, B) having mutual spacing ($a_L$), said beams being directed on to the sheet (26) at an acute angle with respect to the sheet normal (OA), a detector device comprising a photosensitive detector (24) for separate detection of the reflected light beams A1, A2, B1, B2 and comprising an evaluation device (34) for determining the optical quality of the sheet (26) from the detector device signals,
characterised in that
the detector device comprises a location-resolving detector (24) and in that the evaluation device (34) is devised to determine the quantitative parameters characteristic of the optical quality of the sheet (26) from the incidence locations of the four light beams A1, A2, B1, B2 on the location-resolving detector (24) after reflection from the two surfaces (30, 32) of the sheet (26).

9. Apparatus according to claim 8, characterised in that the beam splitter device for producing different distances between the incident light beams A, B consists of at least two beam splitters (12, 14) each of which is movable, according to the thickness of the sheet (26) under investigation, into the path of the rays of light emitted by the laser light source (10).

10. Apparatus according to claim 8, characterised in that the beam splitter device comprises a beam splitter having a between-beams distance which is motor-adjustable in dependence on the thickness of the sheet (26).

11. Apparatus according to any one of the preceding claims, characterised in that a first plane deflection mirror (16) is provided in the path of the two incident light beams emitted by the beam splitter device and directs the light beams A, B on to the sheet (26) at an angle of incidence of about 49°.

12. Apparatus according to any one of the preceding claims, characterised in that a second deflection mirror (18) is provided in the path of the four reflected light beams A1, A2, B1, B2.

13. Apparatus according to claims 11 and 12, characterised in that the laser light source (10) and the deflection mirrors (16, 18) are so aligned that the light beams incident on the first deflection mirror (16) and the light beams A1, A2, B1, B2 reflected by the second deflection mirror (18) extend substantially parallel, and in fact substantially parallel to the sheet normal of the sheet (26).

14. Apparatus according to any one of the preceding claims, characterised in that the evaluation device (34) is adapted to determine the reflection refractive powers of both sheet surfaces (30, 32) and the angle of deviation and the refractive power in transmission from the incidence locations of the four reflected light beams A1, A2, B1, B2 on the location-resolving detector (24) and the between-beams distance ($a_L$) of the incident light beams A, B.

15. Apparatus according to any one of the preceding claims, characterised in that the detector (24) is an analog photodetector having uni-dimensional location-resolution in the plane of incidence of the light.

16. Apparatus according to claim 15, characterised in that the detector device comprises a chopper device (20) disposed in the path of the reflected light beams A1, A2, B1, B2 and in that the chopper device (20) and the beam splitter device (12, 14, 16) can be so arranged that the four reflected light beams A1, A2, B1, B2 reach the location-resolving detector (24) in chronologically separate form.

17. Apparatus according to claim 16, characterised in that a focusing device (22) is disposed to be stationary in the path of the reflected light beams A1, A2, B1, B2 and the location-resolving detector (24) is disposed to be stationary in the focal plane of the focusing device (22) remote from the sheet.

18. Apparatus according to claim 17, characterised in that the focusing device (22) is disposed between the chopper device (20) and the location-resolving detector (24).

19. Apparatus according to any one of claims 16 to 18, characterised in that a focusing device for focusing the incident light beams (A, B) on the chopper device (20) is disposed in the path of the incident light beams (A, B) between the laser light source (10) and the beam splitter device (12, 14).

20. Apparatus according to any one of claims 16 to 19, characterised in that the chopper device (20) is formed by a drum having in the drum wall at least one slit aperture (28) aligned parallel to the drum axis, the drum being disposed at an angle such that only its wall remote from the sheet (26) interrupts the path of the reflected light beams A1, A2, B1, B2.

21. Apparatus according to claim 20, characterised in that at least four slit apertures (28) are provided, and are distributed uniformly over the drum wall.

22. Apparatus according to any one of claims 8 to 14, characterised in that the beam splitter device (12, 14, 16) is so adjustable that the four reflected light beams A1, A2, B1, B2 are incident on the location-resolving detector (24) in physically separate form and in that the detector (24) is adapted to simultaneous location-resolving reception of the four reflected light beams A1, A2, B1, B2.

23. Apparatus according to claim 22, characterised in that the location-resolving detector (24) consists of a number of individual separately scannable photosensitive elements disposed side by side in the plane of incidence of the light.

## Revendications

1. Procédé pour la détermination de la qualité optique d'une lame transparente (26), en particulier d'une vitre en verre flotté, dans lequel deux rayons lumineux parallèles (A, B) présentent un écartement mutuel ($a_L$) sont dirigés sur la lame selon un angle aigu ($\epsilon_0$) par rapport à la perpendiculaire (OA) de la lame, les rayons lumineux réfléchis par la lame sont captés séparément au moyen d'un système de détection comprenant un détecteur photosensible (24), et la direction des rayons lumineux réfléchis est analysée, caractérisé en ce que les quatre rayons lumineux A1, A2, B1, B2 réfléchis par les deux faces (30, 32) de la lame (26) sont tous captés par un détecteur à résolution locale (24), en ce que l'écartement mutuel et l'angle d'incidence $\epsilon_0$ des rayons lumineux incidents A, B sont réglés en fonction de l'épaisseur de la lame, de façon que les rayons lumineux réfléchis A1, A2, B1, B2 soient captés par le système de détection de manière séparée dans l'espace, et en ce que les paramètres servant à la détermination quantitative de la qualité optique de la lame sont calculés à partir des points d'impact des quatre rayons lumineux réfléchis A1, A2, B1, B2 sur le détecteur à résolution locale.

2. Procédé selon la revendication 1, caractérisé en ce que les rayons lumineux incidents A, B sont dirigés sur la lame selon un angle d'incidence $\epsilon_0$ d'environ 49°.

3. Procédé selon l'une des revendications précédentes, caractérisé en ce que les rayons lumineux réfléchis A1, A2, B1, B2 sont captés par le détecteur à résolution locale de manière séparée dans le temps.

4. Procédé selon la revendication 3, caractérisé en ce que les rayons lumineux réfléchis A1, A2, B1, B2 sont focalisés sur le détecteur à résolution locale.

5. Procédé selon l'une des revendications 1 ou 2, caractérisé en ce que les rayons lumineux réfléchis A1, A2, B1, B2 sont captés par le détecteur à résolution locale sans focalisation, de façon sensiblement simultanée, mais de manière séparée dans l'espace.

6. Procédé selon l'une des revendications précédentes, caractérisé en ce que l'angle de réflexion $\epsilon_1$, $\epsilon_2$, $\epsilon_3$, $\epsilon_4$ des rayons lumineux réfléchis A1, A2, B1, B2 est calculé à partir de leur point d'impact sur le détecteur à résolution locale.

7. Procédé selon la revendication 6, caractérisé en ce que les forces de réfraction en réflexion des deux faces de la lame ainsi que l'angle de déflexion et la force de réfraction en transmission sont calculés comme suit, à partir des angles de réflexion $\epsilon_1$, $\epsilon_2$, $\epsilon_3$, $\epsilon_4$ des rayons lumineux réfléchis A1, A2, B1, B2 et à partir de l'écartement mutuel $a_L$ des rayons lumineux incidents A, B :

```
angle de déflexion en transmission
                = ε₂ - ε₁
force de réfraction en transmission
                = const. · ((ε₄ - ε₃) - (ε₂ - ε₁)) / aL
force de réfraction en réflexion de la face avant
                = const. · (ε₃ - ε₁) / aL
force de réfraction en réflexion de la face arrière
                = const. · (ε₄ - ε₂ + ε₃ - ε₁) / aL
```

8. Dispositif pour la détermination de la qualité optique d'une lame transparente (26), en particulier pour la réalisation du procédé selon l'une des revendications précédentes, comprenant une source lumineuse à laser (10) et un système de séparation de rayon (12, 14) pour produire deux rayons lumineux parallèles (A, B) qui présentent un écartement mutuel ($a_L$) et qui sont dirigés sur la lame selon un angle aigu par rapport à la perpendiculaire (OA) de la lame, un système de détection comprenant un détecteur photosensible (24) pour capter séparément les rayons lumineux réfléchis, et un système d'analyse (34) pour déterminer la qualité optique de la lame à partir des signaux du système de détection, caractérisé en ce que le système de détection comprend un détecteur à résolution locale (24) et en ce que le système d'analyse (34) est conçu pour déterminer les paramètres quantitatifs, qui caractérisent la qualité optique de la lame (26), à partir des points d'impact, sur le détecteur à résolution locale (24), des quatre rayons lumineux A1, A2, B1, B2 réfléchis par les deux faces (30, 32) de la lame (26).

9. Dispositif selon la revendication 8, caractérisé en ce que le système de séparation de rayon destiné à créer des écartements différents entre les rayons lumineux incidents A, B se compose d'au moins deux séparateurs de rayon (12, 14) dont chacun, en fonction de l'épaisseur de la lame étudiée (26), peut être déplacé sur la marche du rayon lumineux émis par la source lumineuse à laser (10).

10. Dispositif selon la revendication 8, caractérisé en ce que le système de séparation de rayon comporte un séparateur de rayon dont l'écartement entre les rayons peut être réglé à l'aide d'un moteur en fonction de l'épaisseur de la lame (26).

11. Dispositif selon l'une des revendications précédentes, caractérisé en ce que, sur la marche des deux rayons lumineux incidents émis par le système de séparation de rayon, est placé un premier miroir de déviation plan (16) qui dirige les rayons lumineux A, B sur la lame (26) selon un angle d'incidence d'environ 49°.

12. Dispositif selon l'une des revendications précédentes, caractérisé en ce que, sur la marche des quatre rayons lumineux réfléchis A1, A2, B1, B2, est prévu un second miroir de déviation (18).

13. Dispositif selon les revendications 11 et 12, caractérisé en ce que la source lumineuse à laser (10) et les miroirs de déviation (16, 18) sont orientés de façon que les rayons lumineux frappant le premier miroir de déviation (16) et les rayons lumineux A1, A2, B1, B2 réfléchis par le second miroir de déviation (18) soient approximativement parallèles, plus précisément sensiblement parallèles à la perpendiculaire de la lame (26).

14. Dispositif selon l'une des revendications précédentes, caractérisé en ce que le système d'analyse (34) est conçu pour déterminer les forces de réfraction en réflexion des deux faces (30, 32) de la lame ainsi que l'angle de déflexion et la force de réfraction en transmission, à partir des points d'impact des quatre rayons lumineux réfléchis A1, A2, B1, B2 sur le détecteur à résolution locale (24) et à partir de l'écartement $a_L$ des rayons lumineux incidents A, B.

15. Dispositif selon l'une des revendications précédentes, caractérisé en ce que le détecteur (24) est un photodétecteur analogique à résolution locale unidimensionnelle dans le plan d'incidence de la lumière.

16. Dispositif selon la revendication 15, caractérisé en ce que le système de détection comprend un système hacheur (20) disposé sur la marche des rayons lumineux réfléchis A1, A2, B1, B2, et en ce que le système hacheur (20) et le système de séparation de rayon (12, 14, 16) peuvent être disposés de façon que les quatre rayons lumineux réfléchis A1, A2, B1, B2 frappent le détecteur à résolution locale (24) de manière séparée dans le temps.

17. Dispositif selon la revendication 16, caractérisé en ce qu'un système de focalisation (22) et le détecteur à résolution locale (24) sont disposés de manière fixe sur la marche des rayons lumineux réfléchis A1, A2, B1, B2, dans le plan focal du système de focalisation (22), ledit plan focal étant opposé à la lame.

18. Dispositif selon la revendication 17, caractérisé en ce que le système de focalisation (22) est disposé entre le système hacheur (20) et le détecteur à résolution locale (24).

19. Dispositif selon l'une des revendications 16 à 18, caractérisé en ce qu'un système de focalisation destiné à focaliser les rayons lumineux (A, B) qui frappent le système hacheur (20) est disposé sur la marche des rayons lumineux incidents (A, B) entre la source lumineuse à laser (10) et le système de séparation de rayon (12, 14).

20. Dispositif selon l'une des revendications 16 à 19, caractérisé en ce que le système hacheur (20) est formé par un tambour comprenant au moins un diaphragme à fente (28) orienté parallèlement à l'axe du tambour et ménagé dans la paroi du tambour, le tambour étant incliné de façon que seule sa paroi opposée à la lame (26) interrompe la marche des rayons lumineux réfléchis A1, A2, B1, B2.

21. Dispositif selon la revendication 20, caractérisé en ce qu'il est prévu au moins quatre diaphragmes à fente (28) répartis à intervalles réguliers sur la paroi du tambour.

22. Dispositif selon l'une des revendications 8 à 14, caractérisé en ce que le système de séparation de rayon (12, 14, 16) peut être réglé de façon que les quatre rayons lumineux réfléchis A1, A2, B1, B2 frappent le détecteur à résolution locale (24) de manière séparée dans l'espace, et en ce que le détecteur (24) est conçu pour capter simultanément, en effectuant une résolution locale, les quatre rayons lumineux réfléchis A1, A2, B1, B2.

23. Dispositif selon la revendication 22, caractérisé en ce que le détecteur à résolution locale (24) se compose d'une pluralité d'éléments photosensibles individuels qui sont disposés côte à côte dans le plan d'incidence de la lumière et qui peuvent être balayés séparément.

# Fig.1

# F i g.2

# F i g.3